(19) **Europäisches Patentamt / European Patent Office / Office européen des brevets**

(11) **EP 1 697 868 B1**

(12) **EUROPEAN PATENT SPECIFICATION**

(45) Date of publication and mention
of the grant of the patent:
**17.12.2014 Bulletin 2014/51**

(21) Application number: **03782061.0**

(22) Date of filing: **19.12.2003**

(51) Int Cl.:
***G06F 3/033*** (2013.01)

(86) International application number:
**PCT/CN2003/001087**

(87) International publication number:
**WO 2005/059801 (30.06.2005 Gazette 2005/26)**

(54) **ELECTRONIC PEN-COMPUTER MULTIMEDIA INTERACTIVE SYSTEM**

INTERAKTIVES COMPUTER-MULTIMEDIASYSTEM MIT ELEKTRONISCHEM PEN

SYSTEME INTERACTIF MULTIMEDIA STYLO ELECTRONIQUE-ORDINATEUR

(84) Designated Contracting States:
**AT BE BG CH CY CZ DE DK EE ES FI FR GB GR HU IE IT LI LU MC NL PT RO SE SI SK TR**

(43) Date of publication of application:
**06.09.2006 Bulletin 2006/36**

(73) Proprietors:
• **Intel Corporation**
**Santa Clara, CA 95054 (US)**
• **Intel China Ltd.**
**Chao Yang District,**
**Beijing 100020 (CN)**

(72) Inventors:
• **YEUNG, Minerva**
**Sunnyvale, CA 94086 (US)**
• **YEO, Boon-Lock**
**Sunnyvale, CA 94086 (US)**

• **LI, Dan**
**Shanghai 200336 (CN)**
• **TANG, Xing,**
**Room 1201, Bldg. 39**
**Shanghai 200237 (CN)**

(74) Representative: **Beresford, Keith Denis Lewis et al**
**Beresford & Co.**
**16 High Holborn**
**London**
**WC1V 6BX (GB)**

(56) References cited:
**WO-A-00/21025**     **CN-A- 1 347 065**
**GB-A- 2 365 614**     **JP-A- 2001 056 749**
**US-B1- 6 414 673**     **US-B1- 6 540 141**
**US-B1- 6 540 141**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND

### 1. FIELD

The present invention relates generally to computer systems and, more specifically, to new usage models for personal computers (PCs) in a multimedia interactive mode.

### 2. DESCRIPTION

Many different input devices have been developed over the years for computer systems such as PCs. Devices such as mice, trackballs, touch screens, joysticks, and so on have been used by both sophisticated and unsophisticated computer users to varying degrees of success. For some unsophisticated users such as small children or the elderly, manipulating these input devices has sometimes been problematic, thereby potentially limiting their enjoyment in using PCs.

One relatively recent advance in input methods is the electronic pen. Users may use an electronic pen to write on traditional paper. The electronic pen sends a wireless signal containing coordinate information to a receiver. The receiver can calculate the pen tip's position information and send this information to the PC. This solution is one of the most natural input methods for a PC. The user can write anything on normal paper. The electronic pen can obtain the absolute position of the pen tip without any dependence on the contents of the written material. Some applications have already been enabled using electronic pen technology. In one example, a pen application can capture a user's handwriting and integrate what has been written into an application program (such as an electronic mail (e-mail) program) in order to send an e-mail containing an image of the handwriting. The electronic pen has also been used as a selection device (much as a mouse is used) to control a window's cursor.

Because use of the electronic pen is more natural than other input methods, it may find utility, especially for unsophisticated computer users. For example, small children and the elderly who have difficulty using a keyboard may be able to effectively input information using the pen. The electronic pen may be especially useful for entering information in Asian languages (such as Chinese) into computers.

In addition, electronic books and/or courseware have become more popular because of the inherent support in these materials for multimedia functions. Users may enjoy audio, video, and still images on a PC and get more information from these materials than from a text-only product. However, readers continue to enjoy the convenience and widespread availability of conventional paper books.

US-B1-6540141 describes a system with a sensor which engages desired regions of an encoded physical medium which is designed such that regions including text or graphics also have encoding using a bar code or spectral encoding scheme. The system translates the information encoded on the medium into a function to be performed by the system.

WO-A1-00/21025 describes a transmitter pen location system with a pen having output elements used to determine the location of a pointing tip of the pen in relation to a writing area of a surface.

US 5,485,176 describes an electronic book reading system having a pen and a location system to determine indicia on a page being designated by an operator. A ROM is addressed on the basis of the sensor system to provide electronic information corresponding to the indicia.

Aspects of the present invention are set out in the appended independent claims.

### BRIEF DESCRIPTION OF THE DRAWINGS

The features and advantages of the present invention will become apparent from the following detailed description of the present invention in which:

Figure 1 is a diagram of an electronic pen-computer multimedia interactive system according to an embodiment of the present invention;

Figure 2 is a diagram illustrating an electronic pen system according to an embodiment of the present invention;

Figure 3 is a flow diagram of a maker component and a player component in a multimedia system according to an embodiment of the present invention;

Figure 4 is a flow diagram of player processing according to an embodiment of the present invention;

Figure 5 is a flow diagram of maker processing according to an embodiment of the present invention;

Figure 6 is an example of object identification processing according to an embodiment of the present invention;

Figure 7 is a flow diagram of action linkage processing according to an embodiment of the present invention;

Figure 8 is an example of a page in a book supported by the present system; and

Figure 9 is a flow diagram of a logic behavior linking process according to an embodiment of the present invention.

### DETAILED DESCRIPTION

Embodiments of the present invention introduce a new usage model for computer systems based on the combination of an electronic pen position location system and traditional paper books. Embodiments of the present invention provide a method to link electronic books and/or courseware with traditional paper books.

By using the present invention, a user can enjoy multimedia content on a computer system (such as a PC), while reading a book. The embodiments provide interactivity offered by a PC, but based directly on content selected from an existing paper book. Portions of the book's contents may be processed by the system prior to usage by a user in order to set up the linkages between the book's contents and multimedia content stored on the computer system.

Reference in the specification to "one embodiment" or "an embodiment" of the present invention means that a particular feature, structure or characteristic described in connection with the embodiment is included in at least one embodiment of the present invention. Thus, the appearances of the phrase "in one embodiment" appearing in various places throughout the specification are not necessarily all referring to the same embodiment.

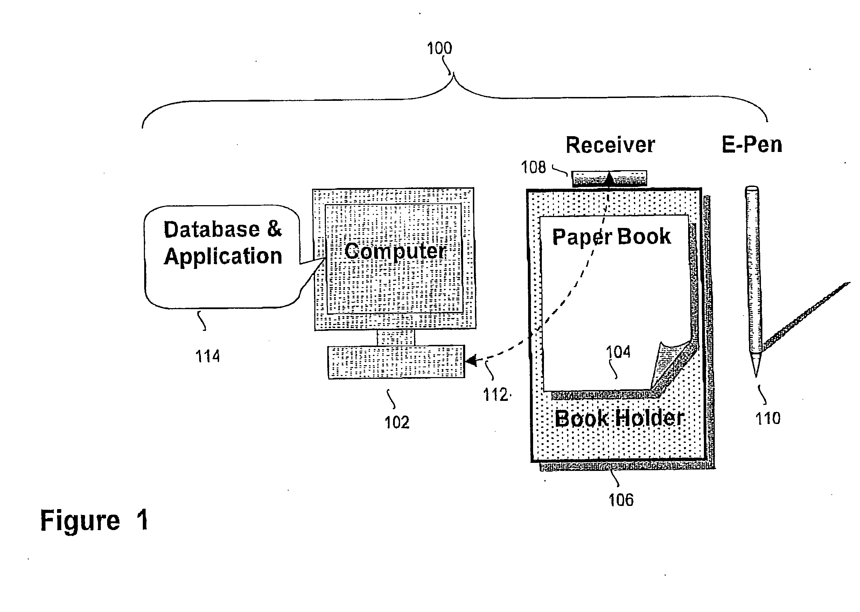

Figure 1 is a diagram of an electronic pen-computer multimedia interactive system 100 according to an embodiment of the present invention. In embodiments of the present invention, a computer system 102 interacts with a traditional paper book 104 being read by a user. The term "book" as used herein may be any pre-existing printed material, such as a fiction or non-fiction book, a periodical such as a magazine, newspaper, or a journal, a coloring book, a pamphlet, an advertisement, and so on. The book may be placed by the user so as to reside on a book holder 106, which holds the book in a fixed relationship to a receiver device 108. An electronic pen (E-pen) 110 may be used by the user to point to and/or write on the book 104. The position of the electronic pen may be determined by the receiver and forwarded over a communications link 112 to the computer system. The communications link may comprise any wired or wireless connection, such as a COM port, universal serial bus (USB), LPT, any variation of implementation of the 802.11 wireless standards, Bluetooth, infrared, and so on.

The computer system includes at least one database and an application 114 to accept the position information of the electronic pen and an indication of what book is being read by the user, and to render multimedia content on the computer system or to provide a selected action in response to reception of the position information. Generally, the responses may include playing one or more of audio content, playing video content, displaying an image or text, or any other multimedia information, or taking a pre-defined action on the computer system (such as adjusting the speaker volume, tuning the display brightness, or powering off the computer system, for example). The responses may be set up in advance of the user reading the book such that the application executing on the computer system links position information of the electronic pen over portions of pages of the conventional, pre-existing published book with selection of an appropriate computer system response.

Embodiments of the present invention may be used as follows. The receiver 108 may be fixed on top of the book holder 106, while the book 104 is put on the book holder by the user. This means the distance between the book and receiver is fixed. In at least one embodiment, the fixed relationship may include one corner and two sides of the book being situated against a fixed 90 degree angle structure of the book holder. When the user uses the electronic pen 110 to select contents of the book on a currently viewed page, the tip position information may be calculated by the receiver 108 and sent to the computer system 102. At least one database may be included in the computer system. The at least one database contains action/response information corresponding to the current E-pen position, the contents of the book for the current page, and stored multimedia contents. The database or portions thereof may be local to the computer system 102, or may be stored and accessed externally from the computer system using well-known techniques, such as over the Internet, for example. An application receives the position information, searches the at least one database for an entry correlated to the position information and book contents, and then plays the corresponding multimedia content or takes a corresponding pre-defined action. In at least one embodiment, the multimedia content may be played on consumer electronics devices such as televisions, stereos, computer display monitors, etc., that may be communicatively coupled with the computer system.

One usage of embodiments of the present invention is the teaching of the English alphabet. For example, the book may contain 26 pages, each page containing a letter of the alphabet. A first page may contain a large letter "A" and pictures of different types of apples or other objects starting with the letter "A". When the user selects the letter "A" on that page of the book (perhaps by depressing a button on the E-pen or touching the E-pen to the paper), the application on the computer system causes the computer to emit the sounds for the word "apple", for example, via the computer system's speaker. At substantially the same time, the computer system may also be used to show more pictures or play a video of apples of different sizes and colors (for example). Thus, embodiments of the present invention take the contents of a pre-existing book and combine this content with the interactivity of a computer system for enhanced information flow and education/entertainment purposes. When used for education, the present invention combines the power of an existing or newly published traditional paper book with the power of a computer system (in terms of multimedia, and Internet access in some embodiments).

With embodiments of the present invention, many other usage modes are possible. For example, different modes of educational systems may be designed for different age groups. For children two to four years of age, an application and related database that teach simple words, alphabets, and numbers can be created based on existing books for such purposes. For children five to seven years of age, an application and related database that teach sentences can be created. In other settings, other modes are possible, and the present invention is not limited in this respect. For example, an application and related database that allows tourists to get more information from an existing printed map can be created. In another example, an application that allows for virtual remote control for electronic devices in the home may be created using the system and techniques described herein.

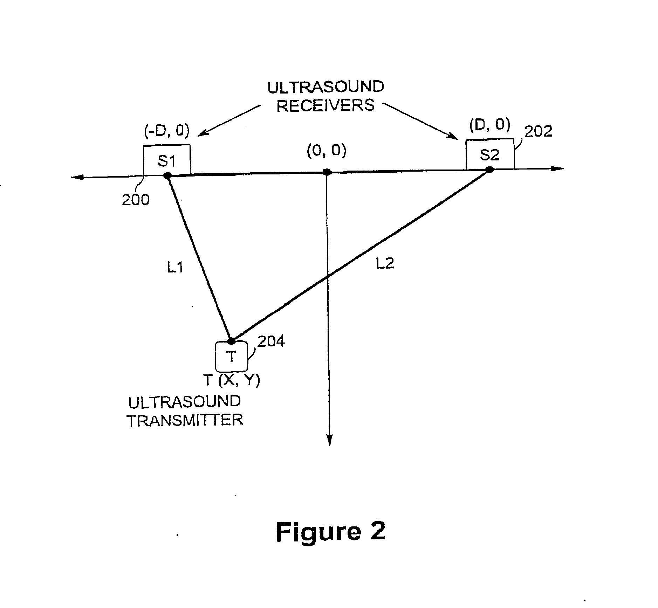

Figure 2 is a diagram illustrating an electronic pen system according to an embodiment of the present invention. The E-pen system obtains absolute tip position information on a page of a book. At least two ultrasound sensors S1 200 and S2 202 may be arranged on a line in the receiver 108, equidistant from a coordinate system origin (0, 0), as noted by (D, 0) and (-D, 0), respectively. The E-pen 110 comprises an ultrasound transmitter T 204. When the pen tip is down, the transmitter sends an ultrasound signal detectable by the receivers. Since the distances L1 = (T, S1) and L2 = (T, S2) are different, the ultrasound signal reaches the two sensors at different times. The receiver 108 may detect the time difference and calculate the length of L1 and L2. The position of T may then be calculated by equation 1:

$$\begin{cases} x = \dfrac{l_1^2 - l_2^2}{4d} \\ y = \sqrt{l_2^2 - \left(\dfrac{l_1^2 - l_2^2 - 4d^2}{4d}\right)^2} \end{cases}$$

The X and Y coordinates specify the absolute position information of the pen tip. The E-pen system sends this information to the computer system 102 over connection 112.

Once the position information is received by the user's computer system 102, the information may be processed by an application program called a "player" component herein. The player receives the position information, searches in at least one database for corresponding multimedia content and/or an appropriate action, and plays the corresponding multimedia and/or performs the action. The user interacts with the player in order to make a traditional paper book into an interactive user experience. The user uses the E-pen to select an object on the book, and the player provides the corresponding response based on the pen tip position and the object type.

Prior to use, at least one database must be generated to contain action/response information relating the pen tip position, current book contents, current page of the book, multimedia contents for the current book, and pre-defined actions for the current book. An application program executing on a publisher's computer system called a "maker" component herein may be used to create the linkages between these data items. The maker may be used by a publisher (or in some cases by a sophisticated user) to make an interactive multimedia product based on an existing traditional paper book (or possibly a newly published book), with limited manual work. The input data to the maker includes the page images of the book, additional multimedia content, and pre-defined actions. The publisher selects an object on a page image, and links the relevant multimedia content and/or action with the selected object. All linkage information may be stored in the at least one database.

In one embodiment, the publisher's computer system may be the same as the user's computer system for the case where the interactive multimedia product and/or the book are produced by the user or another person at the user's site (e.g., a parent prepares the linkages for use by a child). In one embodiment, the multimedia content may comprise one or more of digital images, digital video, digital audio files, and text files produced by or obtained by the user. In one embodiment, the user may provide digital images as the pages of the book (e.g., the user's original digital photographs) and specify the linkages of objects on each page of the book with the multimedia content.

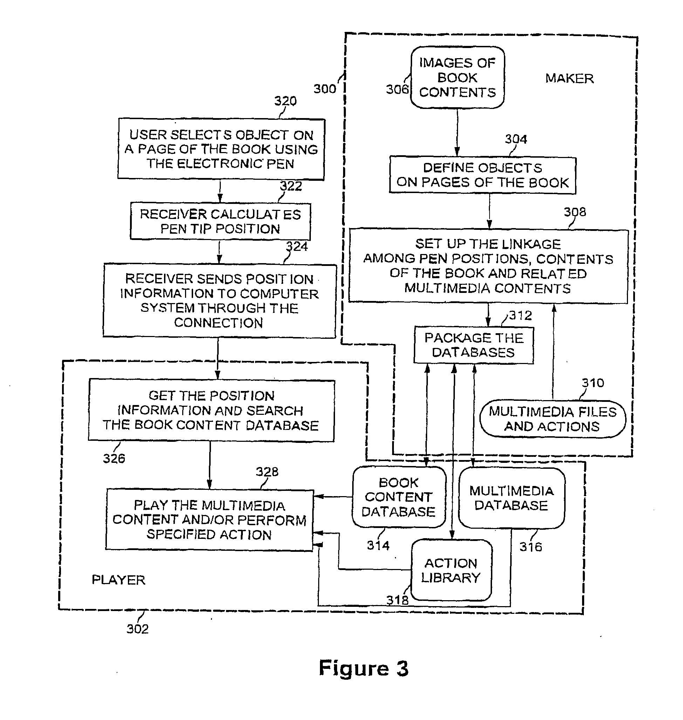

Figure 3 is a flow diagram of a maker component 300 and a player component 302 in a multimedia system according to an embodiment of the present invention. At block 304, the maker component 300 accepts as input images of one or more pages of a book and then defines zone information for objects represented on those pages. In one embodiment, the maker may accomplish this through interaction with a system user acting as a publisher of the multimedia content. At block 308, the maker sets up the linkage between pen positions, the contents of the book (e.g., objects found on pages of the book), and related multimedia contents (e.g., associated audio, video, images, text, and so on) and/or actions, using multimedia files and actions 310 as input data. At block 312, the maker packages the databases for subsequent use by the player component 302. In one embodiment, the publisher provides the multimedia files when operating the maker component and installs them in the databases distributed to the user's computer system with the player component. In another embodiment, the publisher provides links to the multimedia files accessible over a network such as the Internet. In this embodiment, the player component obtains the files as needed using a known file transfer protocol or the well known hyper text transfer protocol (HTTP).

The databases comprise at least a book content database 314, a multimedia database 316, and an action library 318. The book content database contains the images of pages of the book, positional information about objects on the pages, and linkage information between the objects and multimedia contents or actions/responses. The multimedia database contains audio, video, images, text, and other data corresponding to objects on pages of the book for rendering for perception by the user. The action library 318 contains directives for pre-defined actions to be performed by the user's computer system when the position of the electronic pen coincides with an object on a page of the book indicating the associated action. In one embodiment, the actions may include selecting a human language for subsequent communication, adjusting the volume of a speaker, adjusting the brightness of a computer monitor, sending commands to an input/output (I/O) port, powering off the computer system, and so on. Other actions are also contemplated. In one embodiment, the three databases described herein may be combined into a single database.

The databases corresponding to the book may then be distributed using any known mechanism to the user's computer system. After the player application is installed on the user's computer system, the user may put the book on the book holder, start up the player component 302 on the computer system, and begin to interact with the book. When the user selects an area on the book or book holder that has meaning to the system, the user has selected a valid input. In one embodiment, selecting other areas by the user may be ignored by the system. At block 320, the user selects an object represented on a page of the book using the electronic pen. At block 322, the receiver calculates the current pen tip position during the selection. At block 324, the receiver 108 sends the pen tip position information to the computer system 102 using the connection 112. At block 326, the player component running on the computer system receives the position information and searches the book content database 314 to obtain information relating to an object (if any) selected by the current pen position on the current page. If an object is selected and multimedia content and/or an action are associated with the selected object, the player component plays the corresponding multimedia content and/or performs the specified action at block 328. The player component uses data from the multimedia database 316 and the action library 318 in performing block 328. The player component directs the playing of the content on the computer system and/or a communicatively coupled consumer electronics device such as a television.

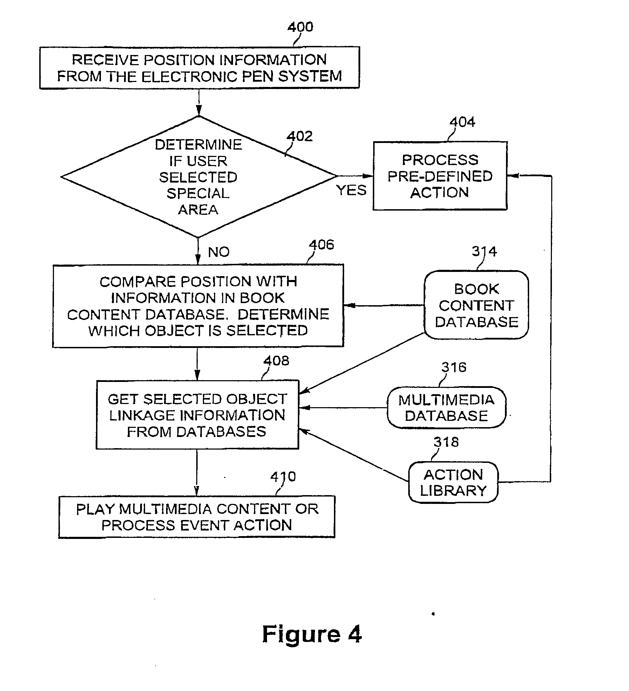

Figure 4 is a flow diagram of player processing according to an embodiment of the present invention. The player receives the current position information from the electronic pen system at block 400. At block 402, the player determines, in one embodiment, based on the current position information of the pen, if the user is selecting a special area on the page of the book, or on the receiver or book holder. If so, the player processes, in one embodiment, a selected pre-defined action at block 404, using the action library 318 as input data. Pre-defined actions may include such things as increasing or decreasing the volume of a speaker, adjusting visual attributes of a computer monitor, selecting a human language for subsequent communication, and so on. Other actions may be defined for specific implementations and the present invention is not limited in this respect. In one embodiment, the action may be used to control the player component or the computer system, these actions having no relationship with the book's contents. If the current pen position information does not indicate a special area, then the player compares the position information with known objects for the page of the book as stored in the book content database 314. The player determines which object of the page is selected (if any) at block 406, based on boundary coordinates of the object and the current pen position information. If an object is selected, the player at block 408 gets the selected object's linkage information from one or more of the book content database, the multimedia database 316, and the action library 318. At block 410, the player plays the linked multimedia content or processes an action based on the object linkage information.

Before the user can cause the rendering of related multimedia content or cause related actions to be performed on the computer system as a result of selecting an object on a page of a book using the electronic pen, the databases must be populated and the linkages between objects, positions and content and actions must be set up. This processing may be performed by a maker component according to embodiments of the present invention. The present maker solves the problem of how to create electronic material from a traditional book with limited effort by a publisher or user. Embodiments of the present invention provide a general method for creating actions/responses on a computer system from paper books. Based on the embodiments, the publisher or user can create interactive multimedia material linked to the existing or newly published traditional paper book with limited manual work.

The maker creates different actions or responses to selection of an object defined on a page of a book. Here, the term "object" may be any zone containing specific meaning on the page (for example, a boy's picture, a picture of an apple, and so on). With limited input by the publisher or user, the maker identifies the object on the page. In various embodiments, the responses include playing audio, video, showing an image, or rendering any other multimedia information, performing a pre-defined action, or executing a logic script based on input from the user. The input data for the maker include page images of a book 500, multimedia contents 502, and a pre-defined action library 318. The output data of the maker includes the book content database 314, the multimedia database 316, and the action library 318. The book content database contains the linkage relationship among objects on each page, multimedia contents in the multimedia database, and pre-defined actions from the action library.

The maker provides three services. First, the maker identifies the objects on a page. The maker determines each object's boundary information based on limited user inputs. Second, the maker creates the linkage among the objects, actions, and responses. For example, if an audio file is linked to an object, when the user selects that object with the electronic pen, the player can then play that audio file. More than one multimedia file and one or more action/response may be linked to each object. Third, the maker packages the databases. When the publisher or user finishes setting up linkages for the pages of a book, the maker packages all of the information into the book content database, the multimedia database, and the action library for distribution with the player to a user's computer system.

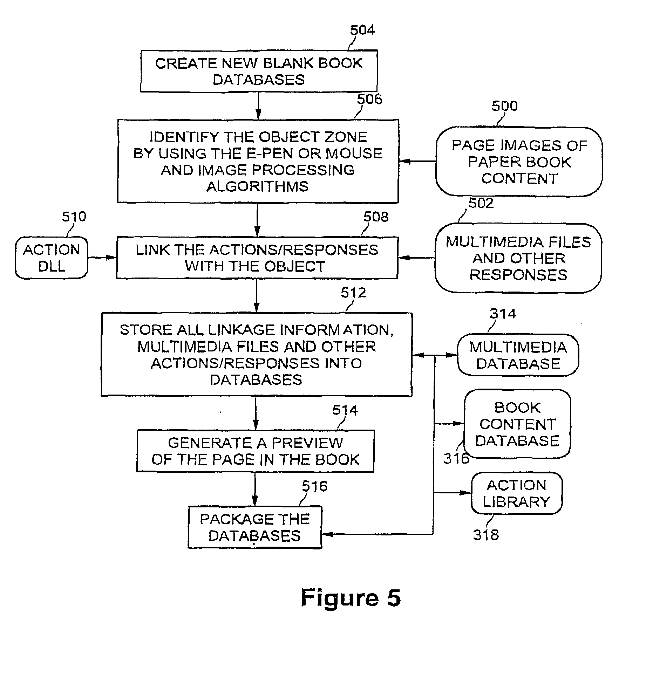

Figure 5 is a flow diagram of maker processing according to an embodiment of the present invention. At block 504, the maker creates new blank book databases to hold the book contents (e.g., object definitions and linkages), multimedia, and actions. At block 506, in one embodiment, the maker allows the publisher or user to identify an object zone by using the electronic pen or a mouse and image processing algorithms. The page images used by this operation may be obtained by scanning using a scanner or may be pre-existing image files. In one embodiment, a book may be put on the book holder and the page image may be displayed on a monitor of the computer system. In this scenario, the boundary of an object on the displayed page image may be used to define the object.

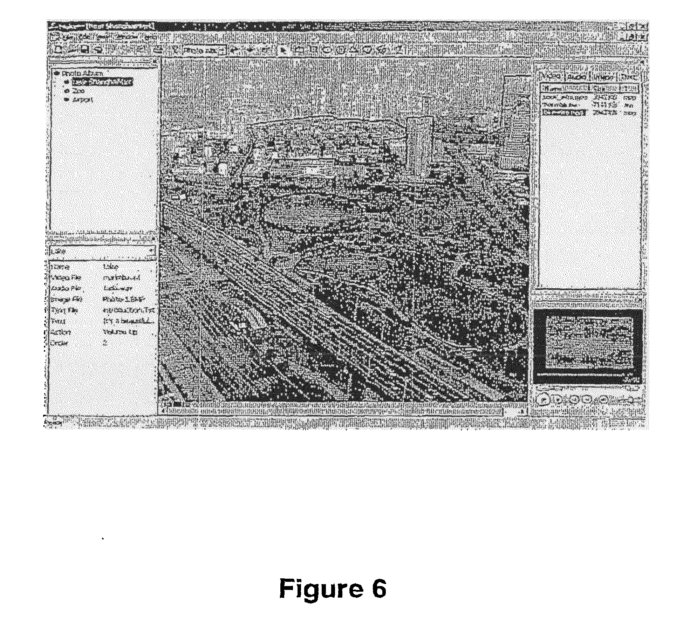

In various embodiments, the maker may use one or more of several methods to identify the objects on the page image. In one embodiment, the publisher or user uses the electronic pen to draw a curve along the boundary of the object on the page of the book, or selects key points on that boundary. The electronic pen system sends the pen position information to the maker, and the maker thus obtains an array of position information of the object. Depending on the publisher's drawing speed, the maker may rescale the set of points and mark them as an object boundary. Alternatively, the publisher may use a mouse to draw a curve along the boundary of the object on the page image as the page image is displayed on the monitor, or the publisher may modify a shape (such as a triangle, rectangle, ellipse or polygon) as is well known in the art to encapsulate the boundary of the object. In yet another embodiment, the publisher may use a mouse to select a set of boundary points of the object displayed on monitor. The maker then applies one or more known digital image processing algorithms to identify the object boundary automatically. For example, known "intelligent scissor" or "magic wand" algorithms may be used. In some embodiments, the algorithms identify objects by examining pixel's gray scale values, colors, and other image information. Figure 6 is an example of an identification of objects process according to one embodiment of the present invention. In this example, the maker has identified several objects in the page image and created a boundary for each object. In this way, all objects may be determined for a page image.

Next, at block 508, the publisher or user uses the maker to manually create a linkage among the objects, actions, and responses. The publisher or user selects an object and assigns actions and/or responses to the object. In at least one embodiment, there are three kinds of actions/responses.

First, the player may play multimedia contents, including playing video, playing audio, showing one or more images, or showing text. In this case, the publisher links the multimedia files to an object. The maker logs this linkage information and saves the link to the book content database.

Second, the player may execute a pre-defined action other than playing video, audio, images, or text. For example, the pre-defined action may be adjusting the volume of the speaker of the computer system, adjusting brightness of the monitor, sending commands to any I/O port, or any other action affecting the computer system. The pre-defined actions may be classified into groups. Each group may comprise a dynamic link library (DLL) 510. A software interface may be defined between the DLLs and the maker. For example, in one embodiment, "GetActionList (LPSAction a_SActionArray, DWORD dwArrayLength,)" and "CallActionByID (INT ActionID)" application program interfaces (APIs) may be implemented for each DLL. The "GetActionList" function returns all valid action names and their action IDs. The maker can call this API and display the action name list on the maker component's user interface (UI). When the publisher or user links an action name to an object, the maker assigns the corresponding Action ID to that object and saves this linkage information in the book content database. When the player wants to execute the action of the object, the player gets the action ID from the database and calls the "CallAction ByID (INT ActionID)" function. The CallActionByID() invokes the specific action based on the Action ID.

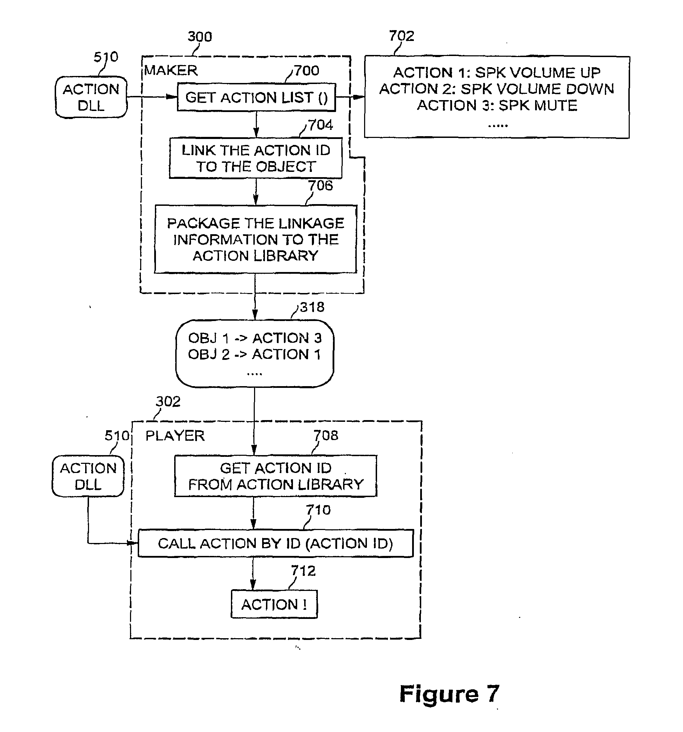

This processing is shown in Figure 7. Figure 7 is a flow diagram of action linkage processing according to an embodiment of the present invention. At block 700, the maker 300 calls the get action list API, which accesses the action list 702. Each entry in the action list may be indicated by a unique action ID. Some examples of actions are shown in Figure 7, but other actions may also be used. At block 704, the maker links the action ID to the object currently being processed. At block 706, the maker packages the linkage information to the action library 318. The action library may be subsequently read by the player component 302. At block 708, when a particular object is selected and the object is linked to an action, the player gets the action ID from the action library. At block 710, the player component calls the action by using the action ID and the CallActionByID() API. The action is then performed by the computer system at block 712.

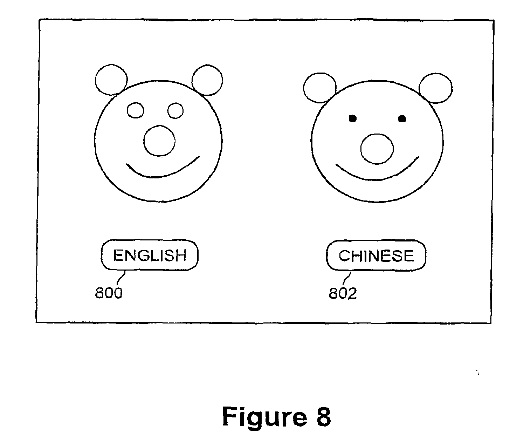

Third, the player may execute complex logic behavior based on previous inputs from users. For example, suppose there are images of animals on the current page of the book, along with two buttons as shown in Figure 8. When a user selects the "English" button 800 first (using the electronic pen), and then selects any animal's picture on the page, the player plays the audio file (for example) which contains the name of the animal in the English language. However, when the user selects the "Chinese" button 802 first, and then selects an animal's picture, the player plays the audio file which contains the name of the animal in the Chinese language. This is merely an example of complex logic behavior. Many other responses may be made based on successive user inputs.

This logic behavior extends the behavior of an object by adding a publisher's own functionality. In one embodiment, it may be implemented by adding a script language extension ability to the maker 300. In various embodiments, the script language may be any known language for such a purpose, such as VBScript, JScript, JavaScript, PerlScript, PythonScript, etc. In one embodiment, there may be a script module for each page of the book. The publisher or user may design a script function for an object. A page global variable or other functions may also be defined in the script module. The maker may save the script module for each page in the action library 318. The player loads the script module for the current page from the action library and adds the script module to a corresponding script engine (e.g., an executable module for processing scripts). When a user select an object with a script function assigned to it, the player will execute the script function using the script engine.

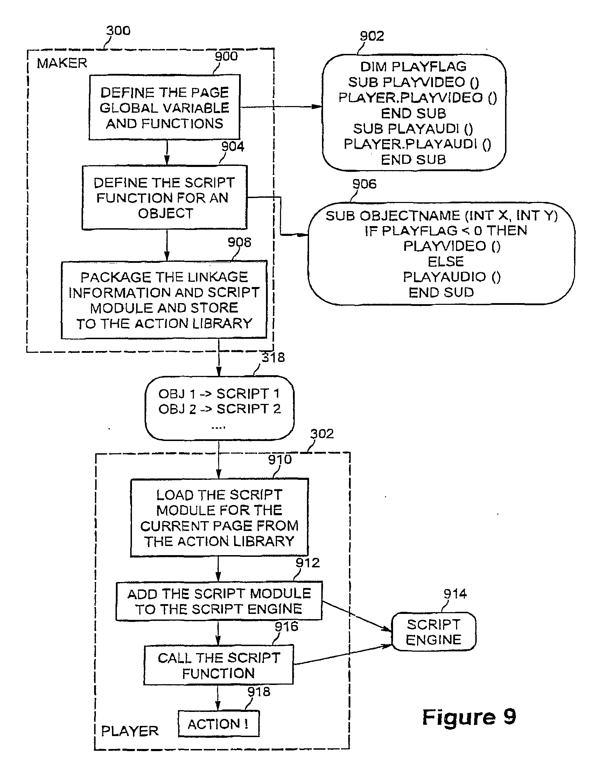

Figure 9 is a flow diagram of this logic behavior linking process according to an embodiment of the present invention. At block 900, the maker defines the page global variable and functions for a selected page of the book. A simplified example of play audio and video functions is show at block 902. At block 904, the maker defines the script function for a selected object. A fragment of a script function example is shown at block 906. At block 908, the maker packages the linkage information and the script function as a script module and stores the linkage information and the script function in the action library. Subsequently, when the user is interacting with a current page of the book, the player loads the script module for the current page from the action library. At block 912, the player adds the script module to the script engine. In one embodiment, the script engine may be VBScript or Jscript as provided by versions of the Windows operating system commercially available from Microsoft Corporation. At block 916, the player may call the script function when the user selects an object linked to a script. The call to the script function results in the script engine processing the script associated with the selected object. At block 918, the action is performed as a result of the operation of the script engine.

Returning back to Figure 5, at block 512, the maker stores all linkage information, multimedia files, and other actions/responses into the appropriate places in the multimedia database, the book content database, and the action library. At block 514, in one embodiment, the maker generates a preview of the page in the book for verification by the publisher or user that the intended linkages have been stored. At block 516, the maker packages the databases 518 for subsequent distribution to the user's computer system.

Embodiments of the present invention provide at least the following advantages over existing multimedia systems. The user can use the electronic pen as the form of input. This is the most natural input method for a computer system such as a PC. With this input method, the present invention can be used by people who are not familiar with typing on a keyboard. The user can still read or look at the traditional book. In the meantime, the user can also control getting multimedia information from the PC. This means that the user can enjoy both the advantages of paper books and the multimedia capabilities that the computer offers, including audio, video, images, and text available locally or via a network such as the Internet. Additionally, new usage models are enabled by embodiments of the present invention. In just two examples, an educational system can be provided using embodiments of the present invention which allows children to learn a language, and tourists can use the invention to get more active information from a traditional map. Many other usage models are possible with the present invention.

Thus, described herein are methods and apparatus to accelerate the conversion from traditional books to interactive multimedia books requiring limited user input. A publisher may use the techniques described herein to build interactive materials based on existing paper books. The present invention provides multiple methods to identify objects on the page. A publisher or user can either use the electronic pen to define the boundary of the object on the paper, or use a mouse to define the boundary of the object on the computer system's monitor with the assistance of known digital image processing algorithms. Additionally, actions may be enabled for a book. This means the user may control the computer system through interaction with a page of a book. Finally, logic behavior may be enabled for a book. This feature extends the book's contents in an infinite number of ways. For example, an existing book may be transformed into a virtual multi-language learning book, a virtual musical instrument, or a virtual remote controller for a consumer electronics device. Other applications are contemplated with embodiments off the present invention.

Although the operations described herein may be described as a sequential process, some of the operations may in fact be performed in parallel or concurrently. In addition, in some embodiments the order of the operations may be rearranged without departing from the invention.

The techniques described herein are not limited to any particular hardware or software configuration; they may find applicability in any computing or processing environment. The techniques may be implemented in hardware, software, or a combination of the two. The techniques may be implemented in programs executing on programmable machines such as mobile or stationary computers, personal digital assistants, set top boxes, cellular telephones and pagers, and other electronic devices, that each include a processor, a storage medium readable by the processor (including volatile and non-volatile memory and/or storage elements), at least one input device, and one or more output devices. Program code is applied to the data entered using the input device to perform the functions described and to generate output information. The output information may be applied to one or more output devices. One of ordinary skill in the art may appreciate that the invention can be practiced with various computer system configurations, including multiprocessor systems, minicomputers, mainframe computers, and the like. The invention can also be practiced in distributed computing environments where tasks may be performed by remote processing devices that are linked through a communications network.

Each program may be implemented in a high level procedural or object oriented programming language to communicate with a processing system. However, programs may be implemented in assembly or machine language, if desired. In any case, the language may be compiled or interpreted.

Program instructions may be used to cause a general-purpose or special-purpose processing system that is programmed with the instructions to perform the operations described herein. Alternatively, the operations may be performed by specific hardware components that contain hardwired logic for performing the operations, or by any combination of programmed computer components and custom hardware components. The methods described herein may be provided as a computer program product that may include a machine readable medium having stored thereon instructions that may be used to program a processing system or other electronic device to perform the method The term "machine readable medium" used herein shall include any medium that is capable of storing or encoding a sequence of instructions for execution by the machine and that cause the machine to perform any one of the methods described herein. The term "machine readable medium" shall accordingly include, but not be limited to, solid-state memories, optical and magnetic disks, and a carrier wave that encodes a data signal. Furthermore, it is common in the art to speak of software, in one form or another (e.g., program, procedure, process, application, module, logic, and so on) as taking an action or causing a result. Such expressions are merely a shorthand way of stating the execution of the software by a processing system cause the processor to perform an action of produce a result.

While this invention has been described with reference to illustrative embodiments, this description is not intended to be construed in a limiting sense. Various modifications of the illustrative embodiments, as well as other embodiments of the invention, which are apparent to persons skilled in the art to which the invention pertains are deemed to lie within the scope of the invention as defined in the claims.

**Claims**

1. A method of operating an electronic-pen computer multimedia interactive system (100) including a computer system (102), an electronic pen (110), a receiver device (108) and a communicating device (112), to associate a selected object shown on any pre-existing printed material (104) selected by a user to a valid response provided by the computer system, the method comprising:

accepting an identification of the pre-existing printed material;
determining (322) position information representing a position on a page of the pyre-existing printed material selected by the user, by detecting ultrasound signal timing information generated by the electronic pen situated near the page of the pre-existing printed material;
transmitting by the communicating device the position information to the computer system;
determining (402), by a player component (302) of the computer system, based on the current position information of the pen, whether the user is selecting a special area of the page and,
if the position information does not indicate a special area of the page:

comparing, by the player component, the position information with zone information defining positions in a stored digital image of the page of the pre-existing printed material corresponding to objects represented on the page to identify a selected object, and correlating the selected object with selected content accessible by the computer system; and
providing, by the computer system, a valid response to the user based at least in part on the selected content, wherein the valid response includes at least one of rendering audio content, rendering video content, rendering image content and rendering text content; and,
if the position information indicates a special area of the page:
performing (404) a predefined action to control the computer system, the predefined action having no relationship to a content of the pre-existing printed material and being obtained from one of a group of dynamic link libraries "DLL" (510) classified by the predefined action, wherein the predefined action is called using an action identifier from an action library (318), the action, identifier being stored in the action library by a maker component of a publisher computer system that creates linkage information to link the action identifier to the selected object and to store the linkage information into the action library to enable the player component to obtain the action identifier from the action database and to call a corresponding application programming interface using the action identifier to cause the computer system to perform the predefined action.

2. The method of claim 1 wherein the comparing step comprises accessing at least one database containing the stored digital image of the page of the pre-existing printed material and the zone information defining the positions of the objects represented on the page.

3. The method of claim 1, wherein correlating the position comprises searching (326) a pre-existing printed material database (314), the pre-existing printed material database comprising positional information of objects in digital images of the pages.

4. The method of claim 1, wherein the pre-existing printed material comprises a traditional paper book, and further comprising identifying the book and a current page within the book, prior to correlating the position to select content.

5. The method of claim 4, wherein the paper book is not modified for use with the electronic pen.

6. An article comprising a storage medium having instructions for controlling a system when executed by a processor to carry out all of the steps of a method as claimed in any one of claims 1 to 5.

7. An electronic-pen computer multimedia interactive system (100) including a computer system (102), an electronic pen (110), a receiver device (108) and a communicating device (112), for associating a selected object shown on any pre-existing printed material (104) selected by a user to a valid response provided by the computer system (102), the electronic pen-computer multimedia interactive system comprising:

an identification component (114) of the computer system to accept an identification of the pre-existing printed material;
the electronic pen (110) operable by the user to determine (322) position information representing a position on a page of the pre-existing printed material selected by the user, by detecting ultrasound signal timing information generated by the electronic pen situated near the page of the pre-existing printed material;
the communicating device (112) to transmit the position information to the computer system (102);
a player component (302) of the computer system to determine, based on the current position information of the pen, whether the user is selecting a special area of the page and,
if the position information does not indicate a special area of the page:
the player component to compare the position information with zone information defining positions in a stored digital image of the page of the pre-existing printed material corresponding to objects represented on the page to identify a selected object, to correlate the selected object with selected content accessible by the computer system;
the computer system to provide a valid response to the user based at least in part on the selected content, wherein the valid response includes art least one of rendering audio content, rendering video content, rendering image content and rendering text content; and,
if the position information indicates a special area of the page:
performing (404) a predefined action to control the computer system, the predefined action having no relationship to a content of the pre-existing printed material and being obtained from one of a group of dynamic link libraries "DLL" (510) classified by the predetermined action, wherein the predefined action is called using an action identifier from an action library (318), the action identifier being stored in the action library by a maker component of a publisher computer system that creates linkage information to link the action identifier to the selected object and to store the linkage information into the action library to enable the player component to obtain the action identifier from the action database and to call a corresponding application programming interface using the action identifier to cause the computer system to perform the predefined action.

8. The system of claim 7 wherein
the player component further accesses at least one database containing the stored digital image of the page of the pre-existing printed material and the zone information defining the positions of the objects represented on the page.

9. The system of claim 7, further comprising a holder structure (106) to hold the pre-existing printed material in a fixed relationship to sensors (200, 202) associated with the electronic pen.

10. The system of claim 7, further comprising a multimedia database (316) to store digital multimedia content, a pre-existing printed material content database (314) to store positional information about objects on digital images of the pages and linkage information between the objects and at least one of the multimedia contents and actions, and an action library (318) to store directives for actions to be performed on the system.

11. The system of claim 7, wherein the pre-existing printed material comprises a traditional paper book and the player component is adapted to identify the book and a current page within the book, prior to correlating the position to selected content.

**Patentansprüche**

1. Verfahren zum Betreiben eines interaktiven Multimedia-Computersystems (100) mit elektronischem Stift, das ein Computersystem (102), einen elektronischen Stift (110), eine Empfängervorrichtung (108) und eine Kommunikationsvorrichtung (112) umfasst, um ein ausgewähltes Objekt, das auf irgendeinem vorher vorhandenen Druckerzeugnis (104) gezeigt wird, das durch einen Benutzer ausgewählt wird, mit einer gültigen Antwort zu verknüpfen, die durch das Computersystem gegeben wird, wobei das Verfahren die folgenden Schritte aufweist:

   Akzeptieren einer Identifikation des vorher vorhandenen Druckerzeugnisses;
   Feststellen (322) von Positionsinformationen, die eine Position auf einer Seite des vorher vorhandenen Druckerzeugnisses repräsentieren, das durch den Benutzer ausgewählt wird, durch Ermitteln von Ultraschallsignal-Timinginformationen, die durch den elektronischen Stift erzeugt werden, der sich nahe der Seite des vorher vorhandenen Druckerzeugnisses befindet;
   Übertragen der Positionsinformationen durch die Kommunikationsvorrichtung zum Computersystem;
   Feststellen (402) durch eine Player-Komponente (302) des Computersystems, beruhend auf den gegenwärtigen Positionsinformationen des Stifts, ob der Benutzer einen speziellen Bereich der Seite auswählt, und, wenn die Positionsinformationen keinen speziellen Bereich der Seite anzeigen:

   Vergleichen durch die Player-Komponente der Positionsinformationen mit Zoneninformationen, die Positionen in einem gespeicherten digitalen Bild der Seite des vorher vorhandenen Druckerzeugnisses definieren, die Objekten entsprechen, die auf der Seite repräsentiert werden, um ein ausgewähltes Objekt zu identifizieren, und Korrelieren des ausgewählten Objekts mit einem ausgewählten Inhalt, auf den durch das Computersystem zugegriffen werden kann; und
   Geben einer gültigen Antwort durch das Computersystem an den Benutzer, die mindestens teilweise auf dem ausgewählten Inhalt beruht, wobei die gültige Antwort das Wiedergeben eines Audioinhalts und/oder das Wiedergeben eines Videoinhalts und/oder das Wiedergeben eines Bildinhalts und/oder das Wiedergeben eines Textinhalts umfasst; und,
   wenn die Positionsinformationen einen speziellen Bereich der Seite anzeigen:

   Durchführen (404) einer vorgegebenen Aktion, um das Computersystem zu steuern, wobei die vorgegebene Aktion keine Beziehung zu einem Inhalt des vorher vorhandenen Druckerzeugnisses aufweist und aus einer Gruppe dynamisch gelinkter Bibliotheken "DLL" (510) erhalten wird, die durch die vorgegebene Aktion klassifiziert werden, wobei die vorgegebene Aktion mittels einer Aktionskennung aus einer Aktionsbibliothek (318) aufgerufen wird, wobei die Aktionskennung in der Aktionsbibliothek durch eine Herstellerkomponente eines Herausgeber-Computersystems gespeichert wird, das Verknüpfungsinformationen erzeugt, um die Aktionskennung mit dem ausgewählten Objekt zu verknüpfen und um die Verknüpfungsinformationen in der Aktionsbibliothek zu speichern, um es der Player-Komponente zu ermöglichen, die Aktionskennung aus der Aktionsdatenbank zu erhalten und mittels der Aktionskennung eine entsprechende Anwendungsprogrammierschnittstelle aufzurufen, um das Computersystem zu veranlassen, die vorgegebene Aktion auszuführen.

2. Verfahren nach Anspruch 1, wobei der Vergleichsschritt das Zugreifen auf mindestens eine Datenbank aufweist, die das gespeicherte digitale Bild der Seite des vorher vorhandenen Druckerzeugnisses und die Zoneninformationen enthält, die die Positionen der Objekte definieren, die auf der Seite repräsentiert werden.

3. Verfahren nach Anspruch 1, wobei das Korrelieren der Position das Durchsuchen (326) einer vorher vorhandenen Druckerzeugnis-Datenbank (314) umfasst, wobei die vorher vorhandene Druckerzeugnis-Datenbank Positionsinformationen von Objekten in digitalen Bildern der Seiten aufweist.

4. Verfahren nach Anspruch 1, wobei das vorher vorhandene Druckerzeugnis ein herkömmliches Papierbuch umfasst, und das ferner das Identifizieren des Buchs und einer gegenwärtigen Seite im Buch vor dem Korrelieren der Position mit dem ausgewählten Inhalt aufweist.

5. Verfahren nach Anspruch 4, wobei das Papierbuch nicht zur Verwendung mit dem elektronischen Stift modifiziert wird.

6. Artikel, der ein Speichermedium aufweist, das Befehle zum Steuern eines Systems aufweist, wenn sie durch einen Prozessor ausgeführt werden, um alle Schritte eines Verfahrens nach einem der Ansprüche 1 bis 5 auszuführen.

7. Interaktives Multimedia-Computersystem mit elektronischem Stift (100), das ein Computersystem (102), einen elektronischen Stift (110), eine Empfängervorrichtung (108) und eine Kommunikationsvorrichtung (112) umfasst, zur Verknüpfung eines ausgewählten Objekts, das auf irgendeinem vorher vorhandenen Druckerzeugnis (104) gezeigt wird, das durch einen Benutzer ausgewählt wird, mit einer gültigen Antwort, die durch das Computersystem gegeben wird (102), wobei das interaktive Multimedia-Computersystem mit elektronischem Stift Folgendes aufweist:

eine Identifikationskomponente (114) des Computersystems, um eine Identifikation des vorher vorhandenen Druckerzeugnisses zu akzeptieren;

den elektronischen Stift (110), der durch den Benutzer bedienbar ist, um Positionsinformationen festzulegen (322), die eine Position auf einer Seite des vorher vorhandenen Druckerzeugnisses repräsentieren, das durch den Benutzer ausgewählt wird, durch Ermitteln von Ultraschallsignal-Timinginformationen, die durch den elektronischen Stift erzeugt werden, der sich nahe der Seite des vorher vorhandenen Druckerzeugnisses befindet;

die Kommunikationsvorrichtung (112), um die Positionsinformationen zum Computersystem (102) zu übertragen;

eine Player-Komponente (302) des Computersystems, um beruhend auf den gegenwärtigen Positionsinformationen des Stifts festzustellen, ob der Benutzer einen speziellen Bereich der Seite auswählt, und,

wenn die Positionsinformationen keinen speziellen Bereich der Seite anzeigen:

die Player-Komponente, um die Positionsinformationen mit Zoneninformationen zu vergleichen, die Positionen in einem gespeicherten digitalen Bild der Seite des vorher vorhandenen Druckerzeugnisses definieren, die Objekten entsprechen, die auf der Seite repräsentiert werden, um ein ausgewähltes Objekt zu identifizieren, das ausgewählte Objekt mit einem ausgewählten Inhalt korrelieren soll, auf den durch das Computersystem zugegriffen werden kann; das Computersystem eine gültige Antwort an den Benutzer geben soll, die mindestens teilweise auf dem ausgewählten Inhalt beruht, wobei die gültige Antwort das Wiedergeben eines Audioinhalts und/oder das Wiedergeben eines Videoinhalts und/oder das Wiedergeben eines Bildinhalts und/oder das Wiedergeben eines Textinhalts umfasst, und,

wenn die Positionsinformationen einen speziellen Bereich der Seite anzeigen:

Durchführen (404) einer vorgegebenen Aktion, um das Computersystem zu steuern, wobei die vorgegebene Aktion keine Beziehung zu einem Inhalt des vorher vorhandenen Druckerzeugnisses aufweist und aus einer Gruppe dynamisch gelinkter Bibliotheken "DLL" (510) erhalten wird, die durch die vorgegebene Aktion klassifiziert werden, wobei die vorgegebene Aktion mittels einer Aktionskennung aus einer Aktionsbibliothek (318) aufgerufen wird, wobei die Aktionskennung in der Aktionsbibliothek durch eine Herstellerkomponente eines Herausgeber-Computersystems gespeichert wird, das Verknüpfungsinformationen erzeugt, um die Aktionskennung mit dem ausgewählten Objekt zu verknüpfen und um die Verknüpfungsinformationen in der Aktionsbibliothek zu speichern, um es der Player-Komponente zu ermöglichen, die Aktionskennung aus der Aktionsdatenbank zu erhalten und mittels der Aktionskennung eine entsprechende Anwendungsprogrammierschnittstelle aufzurufen, um das Computersystem zu veranlassen, die vorgegebene Aktion auszuführen.

8. System nach Anspruch 7, wobei die Player-Komponente ferner auf mindestens eine Datenbank zugreift, die das gespeicherte digitale Bild der Seite des vorher vorhandenen Druckerzeugnisses und die Zoneninformationen enthält, die die Positionen der Objekte definieren, die auf der Seite repräsentiert werden.

**9.** System nach Anspruch 7, das ferner eine Haltestruktur (106) aufweist, um das vorher vorhandene Druckerzeugnis in einer festen Beziehung zu Sensoren (200, 202) zu halten, die mit dem elektronischen Stift verbunden sind.

**10.** System nach Anspruch 7, das ferner eine Multimedia-Datenbank (316), um einen digitalen Multimediainhalt zu speichern, eine Datenbank (314) für einen vorher vorhandenen Druckerzeugnisinhalt, um Positionsinformationen über Objekte auf digitalen Bildern der Seiten und Verknüpfungsinformationen zwischen den Objekten und den Multimediainhalten und/oder Aktionen zu speichern, und eine Aktionsbibliothek (318) aufweist, um Anweisungen für Aktionen zu speichern, die auf dem System ausgeführt werden sollen.

**11.** System nach Anspruch 7, wobei das vorher vorhandene Druckerzeugnis ein herkömmliches Papierbuch umfasst und die Player-Komponente eingerichtet ist, das Buch und eine gegenwärtige Seite im Buch vor dem Korrelieren der Position mit dem ausgewählten Inhalt zu identifizieren.

## Revendications

**1.** Procédé de mise en fonctionnement d'un système interactif multimédia informatique à stylet électronique (100) comportant un système informatique (102), un stylet électronique (110), un dispositif récepteur (108) et un dispositif de communication (112), pour associer un objet sélectionné présenté sur un matériau d'impression préexistant quelconque (104) sélectionné par un utilisateur à une réponse valide fournie par le système informatique, le procédé consistant à :

accepter une identification du support d'impression préexistant ;

déterminer (322) des informations de position représentant une position sur une page du matériau imprimé préexistant sélectionné par l'utilisateur, en détectant des informations de cadencement par signaux ultrasonores générées par le stylet électronique situé à proximité de la page du matériau imprimé préexistant ;

transmettre au moyen du dispositif de communication les informations de position au système informatique ;

déterminer (402), au moyen d'un composant lecteur (302) du système informatique, sur la base des informations de position actuelles du stylet, si l'utilisateur est en train de sélectionner une zone spéciale de la page et,

si les informations de position n'indiquent pas de zone spéciale de la page :

comparer, au moyen du composant lecteur, les informations de position à des informations de zone définissant des positions dans une image numérique stockée de la page du matériau imprimé préexistant correspondant à des objets représentés sur la page afin d'identifier un objet sélectionné, et corréler l'objet sélectionné au contenu sélectionné accessible par le système informatique ; et

fournir, au moyen du système informatique, une réponse valide à l'utilisateur sur la base, au moins en partie, du contenu sélectionné, dans lequel la réponse valide contient au moins l'un d'un rendu de contenu audio, d'un rendu de contenu vidéo, d'un rendu de contenu d'image et d'un rendu de contenu de texte ; et

si les informations de position indiquent une zone spéciale de la page :

exécuter (404) une action prédéfinie pour commander le système informatique, l'action prédéfinie n'ayant aucune relation avec un contenu du matériau imprimé préexistant et étant obtenue dans un groupe de bibliothèques de liens dynamiques "DLL" (Dynamic Link Libraries) (510) classés par l'action prédéfinie, dans lequel l'action prédéfinie est appelée en utilisant un identifiant d'action provenant d'une bibliothèque d'actions (318), l'identifiant d'action étant identifié dans la bibliothèque d'actions par un composant producteur d'un système informatique d'édition qui crée des informations de liens afin de lier l'identifiant d'action à l'objet sélectionné et de stocker les informations de liens dans la bibliothèque d'actions pour permettre au composant lecteur d'obtenir l'identifiant d'action dans la base de données d'actions et d'appeler une interface de programmation d'applications correspondante en utilisant l'identifiant d'action pour faire en sorte que le système informatique exécute l'action prédéfinie.

**2.** Procédé selon la revendication 1, dans lequel l'étape de comparaison consiste à accéder à au moins une base de données contenant l'image numérique stockée de la page du matériau imprimé préexistant et aux informations de zone définissant les positions des objets représentés sur la page.

**3.** Procédé selon la revendication 1, dans lequel la corrélation de la position consiste à effectuer une recherche (326) dans une base de données de matériaux imprimés préexistants (314), la base de données de matériaux imprimés préexistants comprenant des informations de position d'objets dans les images numériques des pages.

**4.** Procédé selon la revendication 1, dans lequel le matériau imprimé préexistant comprend un livre en papier classique, et consistant en outre à identifier le livre et une page actuelle dans le livre, avant de corréler la position au contenu sélectionné.

**5.** Procédé selon la revendication 4, dans lequel le livre en papier n'est pas modifié pour être utilisé avec le stylet électronique.

**6.** Article comprenant un support de stockage contenant des instructions permettant de commander un système lorsqu'elles sont exécutées par un processeur pour mettre en oeuvre la totalité des étapes d'un procédé selon l'une quelconque des revendications 1 à 5.

**7.** Système interactif multimédia informatique à stylet électronique (100) comprenant un système informatique (102), un stylet électronique (110), un dispositif récepteur (108) et un dispositif de communication (112), destiné à associer un objet sélectionné présenté sur un matériau imprimé préexistant quelconque (104) sélectionné par un utilisateur à une réponse valide fournie par le système informatique (102), le système interactif multimédia informatique à stylet électronique comprenant :

un composant d'identification (114) du système informatique permettant d'accepter une identification du matériau imprimé préexistant ;
un stylet électronique (110) pouvant être mis en fonctionnement par l'utilisateur pour déterminer (322) des informations de position représentant une position sur une page du matériau imprimé préexistant sélectionné par l'utilisateur, en détectant des informations de cadencement par signaux ultrasonores générées par le stylet électronique situé à proximité de la page du matériau imprimé préexistant ;
le dispositif de communication (112) permettant de transmettre les informations de position au système informatique (102) ;
un composant lecteur (302) du système informatique permettant de déterminer, sur la base des informations de position actuelles du stylet, si l'utilisateur est en train de sélectionner une zone spéciale de la page et,
si les informations de position n'indiquent pas de zone spéciale de la page :

le composant lecteur permettant de comparer les informations de position à des informations de zone définissant des positions dans une image numérique stockée de la page du matériau imprimé préexistant correspondant à des objets représentés sur la page afin d'identifier un objet sélectionné, afin de corréler l'objet sélectionné à un contenu sélectionné accessible par le système informatique ;
le système informatique permettant de fournir une réponse valide à l'utilisateur sur la base, au moins en partie, du contenu sélectionné, dans lequel la réponse valide comprend au moins l'un d'un rendu de contenu audio, d'un rendu de contenu vidéo, d'un rendu de contenu d'image et d'un rendu de contenu de texte ; et, si les informations de position indiquent une zone spéciale de la page :

exécuter (404) une action prédéfinie pour commander le système informatique, l'action prédéfinie ne présentant aucune relation avec un contenu du matériau imprimé préexistant et étant obtenue à partir de l'une d'un groupe de bibliothèques de liens dynamiques "DLL" (510) classés par l'action prédéterminée, dans lequel l'action prédéterminée est appelée en utilisant un identifiant d'action provenant d'une bibliothèque d'actions (318), l'identifiant d'action étant stocké dans la bibliothèque d'actions par un composant producteur d'un système informatique d'édition qui crée des informations de liens permettant de lier l'identifiant d'action à l'objet sélectionné et de stocker les informations de liens dans la bibliothèque d'actions pour permettre au composant lecteur d'obtenir l'identifiant d'action dans la base de données d'actions et d'appeler une interface de programmation d'applications correspondante en utilisant l'identifiant d'action pour faire en sorte que le système informatique exécute l'action prédéfinie.

**8.** Système selon la revendication 7, dans lequel le composant lecteur accède en outre à au moins une base de données contenant l'image numérique stockée de la page du matériau imprimé préexistant et des informations de zone définissant les positions

**EP 1 697 868 B1**

des objets représentés sur la page.

9. Système selon la revendication 7, comprenant en outre une structure de maintien (106) permettant de maintenir le matériau imprimé préexistant selon une relation fixe par rapport à des capteurs (200, 202) associés au stylet électronique.

10. Système selon la revendication 7, comprenant en outre une base de données multimédia (316) permettant de stocker un contenu multimédia numérique, une base de données de contenus de matériaux imprimés préexistants (314) permettant de stocker des informations de position concernant des objets sur des images numériques des pages et des informations de liens entre les objets et au moins l'un des contenus multimédia et des actions, et une bibliothèque d'actions (318) permettant de stocker des directives concernant des actions devant être exécutées sur le système.

11. Système selon la revendication 7, dans lequel le matériau imprimé préexistant comprend un livre en papier classique et le composant lecteur est apte à identifier le livre et une page actuelle dans le livre, avant de corréler la position à un contenu sélectionné.

**Figure 1**

**Figure 2**

**Figure 3**

400

RECEIVE POSITION INFORMATION
FROM THE ELECTRONIC PEN SYSTEM

DETERMINE
IF USER
SELECTED
SPECIAL
AREA

402

404

PROCESS
PRE-DEFINED
ACTION

YES

NO

406

COMPARE POSITION WITH
INFORMATION IN BOOK
CONTENT DATABASE. DETERMINE
WHICH OBJECT IS SELECTED

314

BOOK
CONTENT
DATABASE

408

GET SELECTED OBJECT
LINKAGE INFORMATION
FROM DATABASES

316

MULTIMEDIA
DATABASE

318

ACTION
LIBRARY

410

PLAY MULTIMEDIA CONTENT OR
PROCESS EVENT ACTION

# Figure 4

CREATE NEW BLANK BOOK
DATABASES
*504*

IDENTIFY THE OBJECT ZONE
BY USING THE E-PEN OR MOUSE
AND IMAGE PROCESSING
ALGORITHMS
*506*

PAGE IMAGES OF
PAPER BOOK
CONTENT
*500*

ACTION
DLL
*510*

LINK THE ACTIONS/RESPONSES
WITH THE OBJECT
*508*

MULTIMEDIA FILES
AND OTHER
RESPONSES
*502*

STORE ALL LINKAGE INFORMATION,
MULTIMEDIA FILES AND OTHER
ACTIONS/RESPONSES INTO
DATABASES
*512*

MULTIMEDIA
DATABASE
*314*

GENERATE A PREVIEW
OF THE PAGE IN THE BOOK
*514*

BOOK
CONTENT
DATABASE
*316*

PACKAGE THE
DATABASES
*516*

ACTION
LIBRARY
*318*

# Figure 5

# Figure 6

**Figure 7**

ENGLISH
800

CHINESE
802

# Figure 8

300

MAKER

900

DEFINE THE PAGE
GLOBAL VARIABLE
AND FUNCTIONS

904

DEFINE THE SCRIPT
FUNCTION FOR AN
OBJECT

908

PACKAGE THE LINKAGE
INFORMATION AND SCRIPT
MODULE AND STORE
TO THE ACTION LIBRARY

902

DIM PLAYFLAG
SUB PLAYVIDEO ()
PLAYER.PLAYVIDEO ()
END SUB
SUB PLAYAUDI ()
PLAYER.PLAYAUDI ()
END SUB

906

SUB OBJECTNAME (INT X, INT Y)
IF PLAYFLAG < 0 THEN
PLAYVIDEO ()
ELSE
PLAYAUDIO ()
END SUD

318

OBJ 1 -> SCRIPT 1
OBJ 2 -> SCRIPT 2
....

302

910

LOAD THE SCRIPT
MODULE FOR THE
CURRENT PAGE FROM
THE ACTION LIBRARY

912

ADD THE SCRIPT MODULE
TO THE SCRIPT ENGINE

916

CALL THE SCRIPT
FUNCTION

918

ACTION !

PLAYER

914

SCRIPT
ENGINE

**Figure 9**

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6540141 B1
- WO 0021025 A1
- US 5485176 A